# EUROPEAN PATENT SPECIFICATION

(11) **EP 0 600 465 B1**
(45) Date of publication and mention of the grant of the patent: **29.05.1996**
(21) Application number: 93119363.5
(22) Date of filing: 21.02.1990
(51) Int. Cl.: B60L 15/20

(54) **Apparatus for controlling an electric motor car**
Vorrichtung zur Steuerung eines elektrischen Fahrzeugs
Appareil pour commander un véhicule à moteur électrique

(30) Priority: 28.02.1989 JP 47348/89
(43) Date of publication of application: 08.06.1994
(62) Divisional of application: 90103332.4
(73) Proprietor: SUZUKI MOTOR CORPORATION, Hamamatsu-shi, Shizuoka-ken (JP)
(72) Inventor: Suzuki, Hiroyasu, Hamamatsu-shi, Shizuoka-ken (JP)
(74) Representative: Klingseisen, Franz, Dipl.-Ing.

(56) References cited:
- US-A- 2 525 507
- US-A- 4 090 117
- PATENT ABSTRACTS OF JAPAN vol. 10, no. 304 (M-526)(2360) 16th October 1986 & JP-A-61 116 909
- PATENT ABSTRACTS OF JAPAN, vol. 8, no. 209, (E-268)(1646), 22nd September 1984; & JP-A-59 92 784
- PATENT ABSTRACTS OF JAPAN, vol. 4, no. 179, (M-46)(661), 11th December 1980; & JP-A-55 127 804

## Description

The invention relates to an apparatus for controlling an electric motorcar according to the preamble of the claim.

Figs. 5 to 7 show a conventional example. Among them, Fig. 5 shows a general construction of an apparatus for controlling a drive motor of an electric motorcar having an electrical variable speed switch, Fig. 6 shows a high/low speed switching section in Fig. 5 and Fig. 7 shows a torque-rotational speed characteristics in the full opening mode of an accelerator in Fig. 6.

The conventional example shown in Fig. 5 comprises: an acceleration signal processing circuit 52 for processing an output signal of a variable resistor (not shown) attached to an accelerator (not shown) and for generating an acceleration signal; a high/low speed switching section 40 provided at the output stage of the acceleration signal processing circuit 52; a pulse width modulating circuit (hereinafter, referred to as a "PWM circuit") 54 provided at the output stage of the high/low speed switching section 40; and a motor drive circuit 55 for generating a drive current to a drive motor 56 at the next stage in accordance with an output signal of the PWM circuit 54.

An oscillator 58 for PWM to generate a reference triangular wave (or a saw-tooth wave) for what is called a chopping control is provided for the PWM circuit 54. The PWM circuit 54 executes the chopping control to an output of the high/low speed switching section 40 by the reference triangular wave and outputs a motor drive control signal.

Practically speaking, as shown in Fig. 6, the high/low speed switching section 40 comprises: a first resistor 41 connected to the output stage of the acceleration signal processing circuit 52; a second resistor 42 to voltage divide the output of the acceleration signal processing circuit 52 together with the resistor 41; and a high/low speed change-over switch 43 serving as speed switching means connected to the resistor 42.

In Fig. 6, when the high/low speed change-over switch 43 is turned "ON", the acceleration signal is voltage divided by the resistors 41 and 42 and the low speed mode is set. On the contrary, when the switch 43 is turned "OFF", the acceleration signal is not voltage divided, so that the high speed mode is set.

However, in the conventional example, as shown in Fig. 7, since the output itself decreases in the low speed mode, there is an inconvenience such that it is particularly difficult to execute the motor start operation which needs a torque as in the case of the start of the motorcar on a slant road surface or the like.

It is an object of the invention to improve such an inconvenience of the conventional example and to provide an apparatus for controlling a drive motor of an electric motorcar in which in the case where a high/low change-over switch is set into the "low speed" mode, in particular, the start of the motorcar which needs a torque can be easily executed in a manner similar to the ordinary state, and a construction is relatively simple.

This object is achieved by the features in the characterizing part of the claim.

Examples of the invention are described in more detail in connection with the drawings.
- Fig. 1: is a block constructional diagram showing a main section of an embodiment of the invention,
- Fig. 2: is a circuit diagram showing a practical construction of Fig. 1,
- Fig. 3: is a circuit diagram showing a construction of a main section of a further embodiment of the invention,
- Fig. 4: is a diagram for explaining the operation of Fig. 3,
- Fig. 5: is a block diagram showing a general construction of an apparatus for controlling a drive motor of an electric motor car having an electrical speed change switch,
- Fig. 6: is a circuit diagram showing a conventional high/low speed switching section and
- Fig. 7: is a graph showing torque-rotational speed characterics in the full opening mode of an accelerator in Fig. 6.

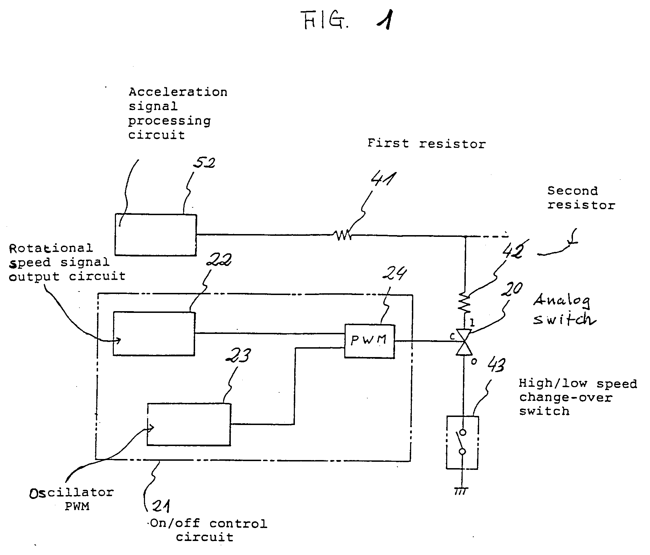

The present invention will be described hereinbelow on the basis of Figs. 1 and 2.

In the diagrams, the same component elements as those in the conventional example mentioned above are designated by the same reference numerals.

The embodiment shown in Fig. 1 comprises: the acceleration signal processing circuit 52 for processing an output signal of a variable resistor (not shown) attached to an accelerator (not shown) as a control terminal and for generating an acceleration signal; the first resistor 41 and the second resistor 42 for voltage dividing the acceleration signal; an analog switch 20 serving as circuit on/off means connected to the second resistor 42; and the high/low speed change-over switch 43 serving as speed switching means in which one end is connected to the analog switch 20 and the other end is connected to the ground.

The analog switch 20 turns on and off the circuit between the second resistor 42 and the high/low speed change-over switch 43. An on/off control circuit 21 to on/off control the analog switch 20 in accordance with the rotational speed of the drive motor 56 is provided for the analog switch 20.

The on/off control circuit 21 comprises: a rotational speed signal output circuit 22 to output a voltage signal which is proportional to the rotational speed of the drive motor 56; an oscillator 23 for PWM to output a reference triangular wave (or a saw-tooth wave); and a PWM circuit 24 for executing a PWM control to an output of the rotational speed signal output circuit 22 by the reference triangular wave and for outputting an on/off control signal to the analog switch 20.

Explaining further in detail, as shown in Fig. 2, the rotational speed signal output circuit 22 comprises: a rotational speed-pulse converter 25 provided for the drive motor 56; and an F/V converter 26 for converting an output signal of the rotational speed-pulse converter 25 into a voltage signal. On the other hand, a comparator 27 shown in Fig. 2 is actually used in the PWM circuit 24. The other construction is the same as that in the foregoing conventional example.

The function and operation of this first embodiment will now be described.

When the rotational speed of the drive motor 56 is zero or a superlow speed, that is, at the start of the motorcar, an output of the comparator 27 is at the "low (L)" level, so that a C terminal input of the analog switch 20 is at the "L" level and the circuit between an I terminal and an O terminal is not conductive. Therefore, the analog switch 20 is set to the "off" state and the circuit is open. Thus, even when the high/low speed change-over switch 43 is set to "on (low speed)", the acceleration signal is not voltage divided, so that the operating mode is not set into the low speed mode and the acceleration signal in the high speed mode is output as a motor control signal to the PWM circuit 54. Consequently, the motor drive circuit 55 generates a drive current of the drive motor 56 in the high speed mode.

On the other hand, in the case where the circuit between the I and O terminals of the analog switch 20 is gradually made conductive due to the PWM control with an increase in rotational speed and the analog switch 20 is gradually turned "on" and the high/low speed change-over switch 43 is set to "on (low speed)", the operating mode is gradually set into the low speed mode.

As described above, according to this first embodiment, even when the high/low speed change-over switch 43 is "on (low speed)", the same starting capability as that in the high speed mode can be obtained. There is an advantage such that, particularly, even in a state which needs a torque, the motorcar can be easily started. On the other hand, a method whereby a strict feedback control is executed by adding a complicated circuit for the rotational speed control is not used but a simple circuit is merely added.

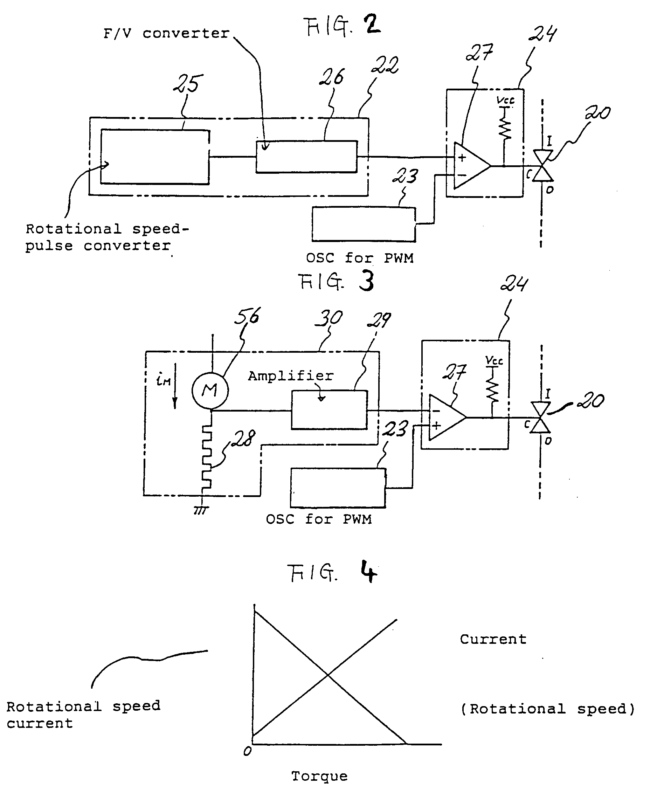

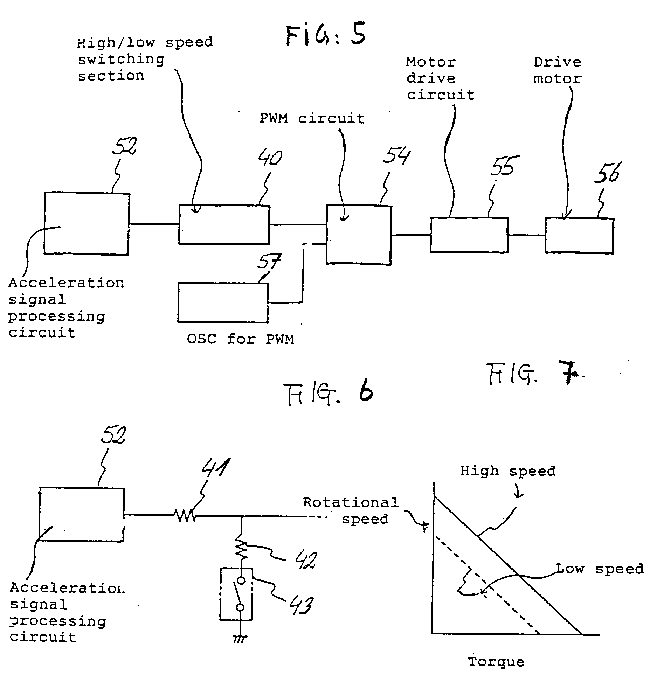

A further embodiment of the invention will now be described on the basis of Figs. 3 and 4.

The same component elements as those in the above first embodiment are designated by the same reference numerals.

In the embodiment shown in Fig. 3, a rotational speed signal output circuit 30 is constructed by: a shunt resistor 28 which is connected to the drive motor 56 and converts a motor current i_{M} into a voltage; and an amplifier 29 to amplify the output voltage of the shunt resistor 28. On the other hand, in the comparator 27, the PWM oscillator 23 is connected to the plus side contrarily with the above first embodiment. The other construction is the same as the first embodiment.

Fig. 4 shows torque-current and rotational speed characteristics in the full opening mode of the accelerator in this case. In Fig. 4, a state in which the motor is difficult to rotate due to a high load can be presumed from the motor current i_{M}. Therefore, such a current is used. That is, since the motor current i_{M} is large in the low speed mode and the output of the comparator 27 is at the "L" level, the circuit between the I and O terminals of the analog switch is not conductive. Therefore, even when the high/low speed change-over switch 43 is "on (low speed)" in a manner similar to the first embodiment, the operating mode is not set into the low speed mode. A drive current of the drive motor 56 when the motor drive circuit 55 is in the high speed mode is generated.

On the other hand, since the motor current i_{M} decreases with an increase in rotational speed, the circuit between the I and O terminals of the analog switch is gradually made conductive due to the PWM control. When the high/low speed change-over switch 43 is set to "on (low speed)", the operating mode is gradually set to the low speed mode.

As mentioned above, even in this second embodiment, the operation and effects similar to those in the first embodiment are also obtained and there is an advantage such that the circuit construction is further simplified.

Since the invention is constructed and functions as mentioned above, according to the invention, an excellent apparatus for controlling a drive motor of an electric motorcar which cannot be obtained hitherto can be obtained, in which due to the operation of the on/off control circuit provided for the circuit on/off means, the circuit on/off means can be opened when the rotational speed of the drive motor is zero or extremely small, and it can be gradually closed with an increase in rotational speed, even in a situation in which a torque is particularly needed in the case where the high/low speed change-over switch serving as speed switching means is set to "low speed", the motorcar can be easily started in a manner similar to the ordinary state, and for instance, if the apparatus is constructed as in the above embodiments, the sufficient effects can be obtained by merely adding a simple circuit without adding a complicated circuit for the rotational speed control.

## Claims

1. An apparatus for controlling an electric motorcar which has a first resistor (41) and a second resistor (42) for voltage dividing an acceleration signal from a control terminal and speed switching means (43) provided for the second resistor (42) and which executes a predetermined control of the drive motor (56) of the motorcar on the basis of a voltage division output,
wherein said apparatus is characterized in that circuit on/off means (20) for turning on and off the second resistor (42) and the speed switching means (43) is arranged therebetween, and an on/off control circuit (21) to turn on and off said circuit on/off means (20) in accordance with a rotational speed of the drive motor (56) is provided for the circuit on/off means.

## Patentansprüche

1. Vorrichtung zur Steuerung eines elektrischen Fahrzeugs, die einen ersten Widerstand (41) und einen zweiten Widerstand (42) zum Spannungsteilen eines Beschleunigungssignals von einem Steueranschluß und eine für den zweiten Widerstand (42) vorgesehene Geschwindigkeits-Umschalteinrichtung (43) aufweist, und die eine vorbestimmte Steuerung des Antriebsmotors (56) des Fahrzeugs auf der Basis einer Spannungsteilungsausgabe ausführt,
wobei die Vorrichtung dadurch gekennzeichnet ist, daß eine Schaltungs-Ein-/Aus-Schalteinrichtung (20) zum Verbinden und Trennen des zweiten Widerstandes (42) und der Geschwindigkeits-Umschalteinrichtung (43) dazwischen vorgesehen ist, und eine Ein-/Aus-Steuerschaltung (21) zum Ein- und Ausschalten der Schaltungs-Ein-/Aus-Schalteinrichtung (20) gemäß einer Drehzahl des Antriebsmotors (56) für die Schaltungs-Ein-/Aus-Schalteinrichtung vorgesehen ist.

## Revendications

1. Un dispositif de commande d'un véhicule à moteur électrique qui comporte une première résistance (41) et une seconde résistance (42) pour appliquer une division de tension à un signal d'accélération provenant d'une borne de commande, et un moyen de commutation de vitesse (43) qui est incorporé pour la seconde résistance (42) et qui accomplit une commande prédéterminée du moteur de propulsion (56) du véhicule à moteur sur la base d'un signal de sortie de division de tension,
ce dispositif étant caractérisé en ce qu'un moyen de fermeture/ouverture de circuit (20) destiné à fermer et à ouvrir le circuit entre la seconde résistance (42) et le moyen de commutation de vitesse (43), est incorporé entre eux, et un circuit de commande de fermeture/ouverture (21) destiné à fermer et à ouvrir le moyen de fermeture/ouverture de circuit (20) conformément à une vitesse de rotation du moteur de propulsion (56), est incorporé pour le moyen de fermeture/ouverture de circuit.
